Europäisches Patentamt

European Patent Office

Office européen des brevets

(11) Veröffentlichungsnummer: **0 231 773**

**A1**

(12) **EUROPÄISCHE PATENTANMELDUNG**

(21) Anmeldenummer: 87100359.6

(22) Anmeldetag: **14.01.87**

(51) Int. Cl.4: **A61C 13/00** , **A61C 5/10** , A61C 13/20

(30) Priorität: **17.01.86 CH 170/86**

(43) Veröffentlichungstag der Anmeldung:
**12.08.87 Patentblatt 87/33**

(84) Benannte Vertragsstaaten:
**AT CH DE FR GB IT LI SE**

(71) Anmelder: **Etablissement Dentaire IVOCLAR**

**FL-9494 Schaan(LI)**

(72) Erfinder: **Wohlwend, Arnold**
**Gartenstrasse 5**
**CH-8903 Birmensdorf(CH)**

(74) Vertreter: **UEXKÜLL & STOLBERG**
**Patentanwälte**
**Beselerstrasse 4**
**D-2000 Hamburg 52(DE)**

(54) **Verfahren und Ofen zur Herstellung von Zahnersatzteilen.**

(57) Zum Herstellen von Zahnersatzteilen wird in einer aushärtbaren Einbettmasse 6 ein Formhohlraum 7 mit Gußkanal 8 gebildet, welcher mit einem Abdichtkolben 11 verschlossen wird. Nach dem Aufheizen wird der Abdichtkolben 11 stoßweise oder dauernd so lange mit Druck beaufschlagt, wie das Keramikmaterial oder die Metallegierung, welche zur Erzeugung des Zahnersatzteils dienen, noch plastifiziert sind. Zur Ausführung des Verfahrens dient ein spezieller Ofen mit einer Preßvorrichtung, deren Kolben 26 in das Innere des Ofens hineinragt und über eine Kolbenstange 27 auf den Abdichtkolben 11 wirkt, wobei die Kolbenstange gegebenenfalls selbst als Abdichtkolben dient.

FIG. 6

EP 0 231 773 A1

## Verfahren und Ofen zum Herstellen von Zahnersatzteilen

Gegenstand der Erfindung sind ein Verfahren und ein Ofen zum Herstellen von Zahnersatzteilen aus plastifizierbarem und aushärtbarem Material unter Anwendung von Wärme, wobei auf einem Arbeitsstumpf ein der Form des Zahnersatzteils maßgenau entsprechendes Modell aus wenigstens teilweise aus Wachs oder Kunststoff bestehendem Material modelliert wird.

Bei einem bekannten, Cerestore-Technik genannten Verfahren dieser Art wird ein auf dem Arbeitsstumpf modelliertes Wachsmodell mit einem Wachsstöpsel versehen, mit Gips beschichtet und in eine Küvette eingesetzt. Durch Einbringen dieser Küvette in ca. 100°C heißes Wasser wird das Wachs ausgeschwemmt und so eine Hohlform mit Eingußkanal geschaffen. In diese Hohlform wird ein spezielles, bei 180°C plastifizierbares Keramikmaterial, dem Kunstharze und Weichmacher beigegeben sind, eingepreßt. Der ausgeformte und sowohl vom Arbeitsstumpf als auch vom Eingußkanal befreite Preßling wird in einem Ofen während etwa 12 Stunden langsam auf über 1300°C aufgeheizt und dadurch gebrannt. Mit diesem Verfahren ist ein unterstützungsfreies Brennen des Preßlings ohne Gefahr des Schrumpfens nur möglich, weil ein äußerst kompliziert zusammengesetztes und teures Keramikmaterial verwendet wird. Außerdem muß der gebrannte Preßling nachträglich zur Anpassung an die natürliche Zahnfarbe mit Verblendporzellan behandelt werden. Ein derartiges Verfahren beschreibt auch die EP-B-30850.

Um das Verblenden zu vermeiden, wurde auch schon vorgeschlagen, den Wachsformling in feuerfestes Material einzubetten und in einem Ofen auf 900°C zu erhitzen. Das Wachs wird dadurch ausgebrannt und in den so geschaffenen Formhohlraum wird Glasmaterial im Schleudergußverfahren eingegegossen. Die erhaltenen Formlinge sind jedoch relativ transparent und müssen mit keramischen Farben bemalt werden. Das hierbei zur Anwendung gelangende, auch bei der Herstellung keramischer Porzellanzähne verwendete Glasmaterial besitzt auch nicht immer die gewünschte Stabilität.

Aus der EP-B-22655 ist es weiterhin bekannt, die durch Einbetten des Wachsmodells in eine feuerfeste Masse und Ausbrennen des Wachses erhaltene Form vorzuerhitzen und mit einer bei 1325 bis 1500°C hergestellten Schmelze einer speziellen Glaskeramik zu füllen, wobei zum vollständigen Ausfüllen der Form Druck Anwendung finden kann. Als Druckmittel können Druckluft oder ein an die Form angelegtes Vakuum, mechanische Mittel wie ein Kolben, Zentrifugalkräfte wie beim Schleuderguß und dergleichen dienen. Das Verfahren ist wegen der separaten Herstellung der Glaskeramikschmelze bei extrem hohen Temperaturen sehr schwierig zu handhaben und es besteht darüber hinaus die Gefahr, daß während des Härtens und Abkühlens des Zahnersatzteiles in der Form eine merkliche Schrumpfung stattfindet, was zu erheblichen Problemen beim Einpassen des Zahnersatzteiles in das Gebiß des Patienten führt.

Der Erfindung liegt demgegenüber die Aufgabe zugrunde, ein Verfahren der eingangs genannten Art zu schaffen, das bei Verwendung eines unkomplizierten Materials zu einwandfrei maßgenauen stabilen Zahnersatzteilen, z.B. Kappen oder Vollporzellankronen, führt, die keinerlei Schrumpfung beim Aushärten erleiden.

Gegenstand der Erfindung ist demgemäß ein Verfahren zum Herstellen von Zahnersatzteilen aus aushärtbarem keramischen Material oder einer Metallegierung unter Anwendung von Wärme und Druck, bei welchem auf einem Arbeitsstumpf ein der Form des Zahnstumpfes maßgenau entsprechendes Modell aus einem ausbrennbaren Material modelliert und am Modell ein den späteren Gußkanal bildender Strang angeformt wird, wonach das Modell in eine feuerfeste, aushärtbare Einbettmasse eingebettet, durch Erhitzen das ausbrennbare Material entfernt und dadurch in der Einbettmasse ein entsprechender Formhohlraum geschaffen wird, in den das keramische Material oder die Metallegierung eingebracht werden, und das Zahnersatzteil nach dem Brennen und Abkühlen entformt wird, welches dadurch gekennzeichnet ist, daß das keramische Material oder die Metallegierung durch Erhitzen plastifiziert und über einen im Gußkanal angeordneten Abdichtkolben mit Druck beaufschlagt und dadurch unter Druckanwendung in die Hohlform gepreßt, ausgehärtet und abgekühlt wird.

Zur Bildung des späteren Gußkanals wird an das Wachsmodell vorteilhafterweise ein Keramik oder Legierungs-Strang vorzugsweise in Form eines Zylinders angeformt. Gemäß einer besonders günstigen Ausführungsform wird der Zylinder mit einer Wachsschicht ummantelt und mit Hilfe von Wachs mit dem Modell verbunden.

Erfindungsgemäß werden das keramische Material oder die Metallegierung in plastifiziertem Zustand mit Druck beaufschlagt, wobei die Druckanwendung vorzugsweise vor Erreichen der Höchsttemperatur beginnt und in einem einzigen oder in mehreren Druckstößen erfolgt, solange das Keramikmaterial oder die Legierung plastifiziert sind. An sich reicht es aus, durch einzelne Druckstöße dafür zu sorgen, daß das plastifizierte Material die Form immer vollständig ausfüllt, um die beim Aushärten und/oder Abkühlen auftretende Schrumpfung auszugleichen. Es ist jedoch auch möglich, den Druck ununterbrochen aufrechtzuerhalten, solange das Keramikmaterial oder die Legierung plastifiziert sind.

Zur Durchführung des erfindungsgemäßen Verfahrens eignen sich die in der Dentaltechnik an sich bekannten Keramikmaterialien, auch solche, welche unter herkömmlichen Verarbeitungsbedingungen eine Schrumpfung zeigen. Bevorzugt sind aluminiumoxidhaltige Keramikmaterialien, welche nach Erhitzen auf 1180 bis 1250°C etwa 10 bis 40 min. lang in der Form auf dieser Temperatur gehalten werden. Bei Verwendung eines transluzenten Keramikmaterials tritt die Plastifizierung bei niedrigerer Temperatur ein. Es wird dann bei etwa 960°C erstmals gepreßt und beispielsweise 20 min. auf dieser Temperatur gehalten. Anschließend wird die Temperatur um weitere 100° auf weitere 1060°C gesteigert und diese Temperatur nach bzw. unter erneutem Pressen wiederum etwa 20 min. lang gehalten.

Die Erfindung läßt sich auch mit magnesiumoxid-haltigem Keramikmaterial, Glasmaterial oder geeigneten Dentallegierungen durchführen.

Zur Erleichterung der Plastifizierung und Befüllung der Form können dem Keramikmaterial oder Legierungspulver geeignete rückstandsfrei ausbrennbare Stoffe zugesetzt werden. Bei Verwendung einer organischen Flüssigkeit läßt sich auf diese Weise ein bereits bei Zimmertemperatur pastenförmiges Material erhalten. Bei Zusatz von niedrig schmelzenden Kunststoffen oder Wachsen wird derselbe Effekt bei niedrigen Temperaturen von 100 bis 250°C erreicht. Andererseits ist es möglich, den Gußkanal mit dem Keramikmaterial oder der Legierung in Form eines Pulvers oder eines Stabes zu füllen. Durch Erhitzen auf die Plastifizierungstemperatur des Materials fließt dieses in die Form und füllt diese gegebenenfalls nach Anwendung von Druck vollständig aus.

Als Einbettmasse zur Herstellung der Form eignen sich feuerfeste selbsthärtende Einbettmassen. Bevorzugte Materialien sind phosphatgebundener Quarz-Cristobalit und Massen auf Zirkoniumoxidbasis.

Gemäß einer bevorzugten Ausführungsform erfolgt das Erhitzen der zeitweilig oder ständig mit Druck beaufschlagten Formmasse unter Unterdruck bzw. Vakuum, um eine vollständige Entgasung des Formhohlraumes und der plastifizierten Masse zu erreichen.

Gegenstand der Erfindung ist ferner ein Ofen, welcher sich zum Durchführen des erfindungsgemäßen Verfahrens besonders eignet. Der Ofen ist mit einer integrierten Heizung ausgestattet und dadurch gekennzeichnet, daß er die einen Formhohlraum enthaltende Küvette aufnimmt und mit einer Preßvorrichtung versehen ist, deren Kolben auf den im zum Formhohlraum führenden Gußkanal angeordneten Abdichtkolben einwirkt. Normalerweise wird die Preßvorrichtung an der Außenseite des Ofens angeordnet sein, während der Kolben durch eine entsprechend abgedichtete Öffnung in das Innere des Ofens hineinragt. Bei entsprechender Wahl des Durchmessers des Gußkanals und des Kolbens der Preßvorrichtung kann letzterer selbst als Abdichtkolben dienen. Für den Fall, daß das Verfahren unter Unterdruck bzw. Vakuum durchgeführt werden soll, ist der Ofen an eine Unterdruckleitung anschließbar und dadurch evakuierbar.

Zur näheren Erläuterung der Erfindung sollen die beiliegenden Figuren dienen, welche schematisch die Arbeitsschritte des erfindungsgemäßen Verfahrens am Beispiel der Herstellung einer Krone sowie den erfindungsgemäßen Ofen wiedergeben. Es zeigen:

Fig. 1 das auf dem Arbeitsstumpf geschaffene Modell mit dem Strang für den Gußkanal,

Fig. 2 das Modell nach dem Einbetten in die Einbettmasse,

Fig. 3 das Einführen des Keramikmaterials in den Einfüllkanal der Einbettmasse,

Fig. 4 die Einbettmasse mit gefülltem und abgeschlossenem Gußkanal,

Fig. 5 das Einpressen des plastifizierten Keramikmaterials in den Formhohlraum.

Fig. 6 den erfindungsgemäßen Ofen mit eingesetzter Küvette im Schnitt.

Wenn ein Zahnersatzteil, z.B. eine Krone aus aluminiumoxidhaltigem Porzellan, hergestellt werden soll, kann hierzu ein bekanntes Material verwendet werden, das z.B. folgende einfache Zusammensetzung aufweist:

| Bestandteile | Gew.% |
|---|---|
| Glasbilder $SiO_2$ | 62.0 bis 65.0 |
| Zwischenoxid $Al_2O_3$ | 17.0 bis 20.0 |
| Flußmittel $K_2O$ | 6.5 bis 7. |
| Flußmittel $Na_2CO_3$ | 4.2 bis 4.7 |
| Flußmittel CaO | 1.6 bis 1.8 |
| Flußmittel $B_2O_3$ | 6.7 bis 7.3 |

Diesem zur Glasbildung dienenden Grundmaterial werden 40 bis 60 Gew.% freies Aluminiumoxid beigemischt, um dem Material die notwendige Festigkeit zu geben. Dieses in Pulverform vorliegende Material wird mit einem Plastifiziermittel vermischt. Als solches kann z.B. zur Hälfte mit encerium anhydricum vermischtes Glyzerin verwendet werden.

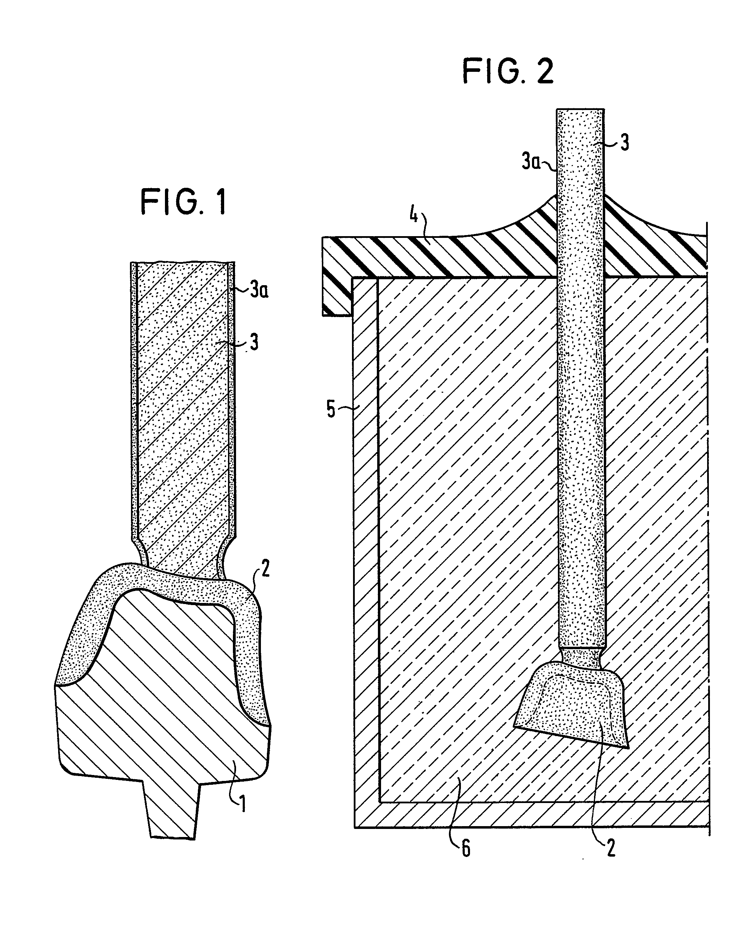

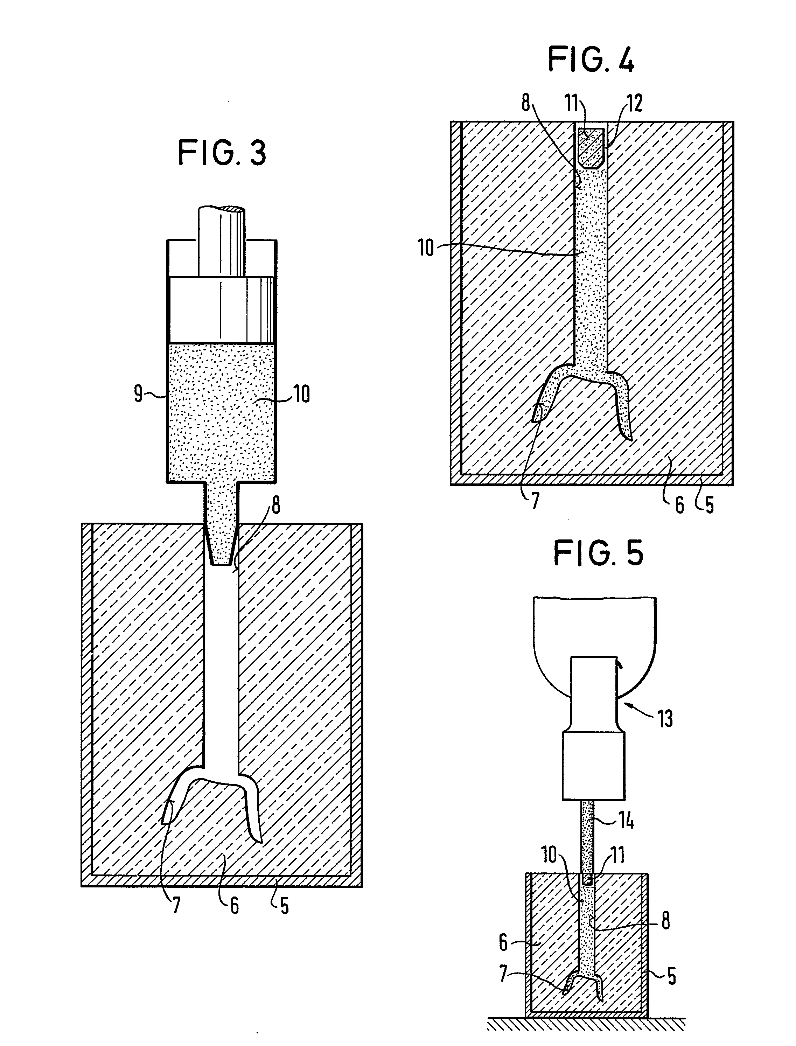

Auf einem Arbeitsstumpf 1 (Fig. 1) wird ein form-und maßgenaues Modell 2 der Krone aus Wachs modelliert. Die Modellwandstärke beträgt etwa 0,5 bis 0,8 mm. An die obere Partie dieses Modells wird ein Keramikzylinder 3 ($Al_2O_3$) angewachst, wobei dieser Zylinder 3 mit einer dünnen, z.B. 0,05 bis 0,2 mm, vorzugsweise 0,15 mm dicken Wachsschicht 3a ummantelt ist. Der Zylinder 3 wird nach Abnahme des an ihm fixierten Kronenmodells vom Arbeitsstumpf 1 im Zentrumsloch eines beispielsweise aus Kunststoff bestehenden Küvettendeckels 4 (Fig 2.) fixiert. Zylinder 3 und Kronenmodell 2 werden in eine Metallküvette 5 eingesetzt, wobei der Deckel 4 die Küvette 5 nach oben hin abschließt. In die Küvette 5 wird nun eine feuerfeste, phosphatgebundene Quarz-Cristobalit-Einbettmasse 6 eingebracht, die durch einen chemischen Abbindeprozeß selbsttätig härtet. Nach dem Härten der Einbettmasse 6 wird der Deckel 4 samt Zylinder 3 entfernt, während das Kronenmodell 2 in der Einbettmasse 6 verbleibt. Anschließend wird die Küvette 5 in einem Ofen während etwa 2 Stunden auf 1000°C aufgeheizt; dies hat ein Ausbrennen des Wachses des Kronenmodells 2 zur Folge, so daß an seiner Stelle in der Einbettmasse 6 ein Formhohlraum 7 (Fig. 3) entsteht, der durch den vom herausgenommenen Zylinder 3 geschaffenen Gußkanal 8 nach außen hin offen ist.

Mittels einer geeigneten Füllvorrichtung 9 wird nun das eingangs genannte plastische keramische Material 10 eingefüllt, indem es in den Gußkanal 8 eingespritzt oder gedrückt wird. Anschließend wird der obere Bereich des Gußkanals von Füllmaterial freigemacht und an desse Stelle wird ein Abdichtkolben 11 aus Keramik in den Gußkanal 8 eingesetzt. Die auf dem Füllmaterial 10 aufliegenden Kanten des Kolbens 11 sind zweckmäßig gebrochen oder abgerundet.

Die Küvette 5 mit dem eingefüllten Füllmaterial 10 wird nun in einem Ofen unter Vakuum langsam bis auf 1180°C aufgeheizt. Wenn dabei das Füllmaterial 1000°C erreicht, wird das keramische Material plastisch. Die Endtemperatur von 1180°C wird etwa 20 min. lang aufrechterhalten; diese Zeit genügt, um ein vollständiges Ausbrennen des organischen Materials zu erreichen.

Nun werden mittels einer Preßvorrichtung 13, die einen Keramikstempel 14 aufweist, auf den Kolben 11 eine oder mehrere Pressungen ausgeübt, wodurch das plastische keramische Füllmaterial in den Formhohlraum 7 gepreßt wird. Der Keramikstempel 14 muß dabei selbstverständlich einen etwas kleineren Querschnitt aufweisen als der Gußkanal 8. Es können je nach Volumen des herzustellenden Zahnersatzteils Drucke von 0,5 bis 3, vorzugsweise 0,5 bis 1 und insbesondere 0,8 bar angewendet werden. Sind mehrere Preßhübe vorgesehen, so kann der erste Preßhub schon vor Erreichen der Endtemperatur z.B. bei 1060°C und ein zweiter Preßhub nach der etwa 20 min. dauernden Haltezeit bei 1180°C erfolgen.

Durch das Einpressen des plastischen erhitzten Füllmaterials in den Formhohlraum werden die beim Brennen dieses Materials sonst unvermeidbaren Schrumpfverluste vermieden. Der nach dem Abkühlen ausgeformte Preßling entspricht somit form-und maßgenau dem zu Beginn des Verfahrens modellierten Kronenmodell.

Das Pressen kann jeweils außerhalb des zur Erreichung der notwendigen Plastifizier-und Brenntemperatur vorgesehenen Ofens erfolgen. Vorzugsweise werden die Preßvorgänge bei im Ofen verbleibender Küvette durch eine entsprechende Öffnung in der Ofendecke hindurch vorgenommen.

Nach dem Abtrennen des Gußansatzes vom Formling wird dieser z.B. durch Anstrahlen mit Glasperlen gereinigt und kann nun in herkömmlicher Weise durch Beschichten mit Dentin und Schmelzmasse verblendet werden.

Anstelle von Kronenkappen wie vorstehend beschrieben können nach dem erfindungsgemäßen Verfahren auch transluzente Vollporzellankronen oder Glaskronen hergestellt werden. Modellieren und Einbetten des Kronenmodells erfolgen dabei wie beschrieben. Beim Aufheizen und Pressen des transluzenten Füllmaterials müssen jedoch andere Aufheizzeiten gewählt werden. So können dabei der erste Preßgang bei Erreichen einer Temperatur von 960°C und ein zweiter Preßgang bei 1060°C durchgeführt werden, wobei jeweils die Pressung während 20 min. aufrechterhalten wird. Das Aufheizen kann jeweils unter Vakuum erfolgen. Auch dieser Preßling kann nach dem Ausformen z.B. mittels Glasperlen gereinigt werden, wobei im Randbereich haftende Einbettmasse im Ultraschallbad entfernt werden kann.

Nach dem Entfernen des Gußansatzes kann die Krone oberflächlich mit Glasurmasse versehen und nochmals gebrannt werden. Es werden dabei vier verschiedene weißlich eingefärbte Materialien angeboten, die unterschiedliche Transluzenz aufweisen. Dadurch wird das oberflächliche Bemalen wesentlich erleichtert.

4

Bei dem vorangehend beschriebenen Beispiel wurde das Kronenmodell vollständig aus Wachs hergestellt. Es ist aber auch möglich, das Modell aus einem Wachs/Porzellan-Gemisch, z.B. im Verhältnis 1:7 herzustellen. Es muß dann in die Hohlräume 7, 8 der Einbettmasse 6 kein Füllmaterial eingebracht werden, sondern das keramische Material kann in Pulverform oder in Form eines Preßlings aus Keramikpulver in den Einfüllkanal 8 eingesetzt werden. Aufheiz-und Preßvorgänge bleiben jedoch gleich wie bei dem vorangehend beschriebenen Verfahren.

Ganz analog kann vorgegangen werden, wenn zur Herstellung des Zahnersatzteils kein keramisches Material, sondern eine Metallegierung verwendet wird. Hier wird nach dem Einbetten des mit einem Gußkanal versehenen Kronenmodells und Entfernen des Strangs ein passender Stab oder ein Pulver der Metallegierung in den Einflüllkanal 8 eingebracht. Anschließend erfolgt das Aufheizen zum Plastifizieren der Metallegierung und entsprechendes dauerndes oder mehrmaliges Pressen. Zweckmäßig bleibt die Füllung solange unter Druck, bis sie nach genügender Abkühlung ausgehärtet ist. Auch hier ist dank der Pressung kein Schrumpfen beim Erkalten der Metallegierung zu befürchten und es wird ein form-und maßgenaues Zahnersatzteil erhalten.

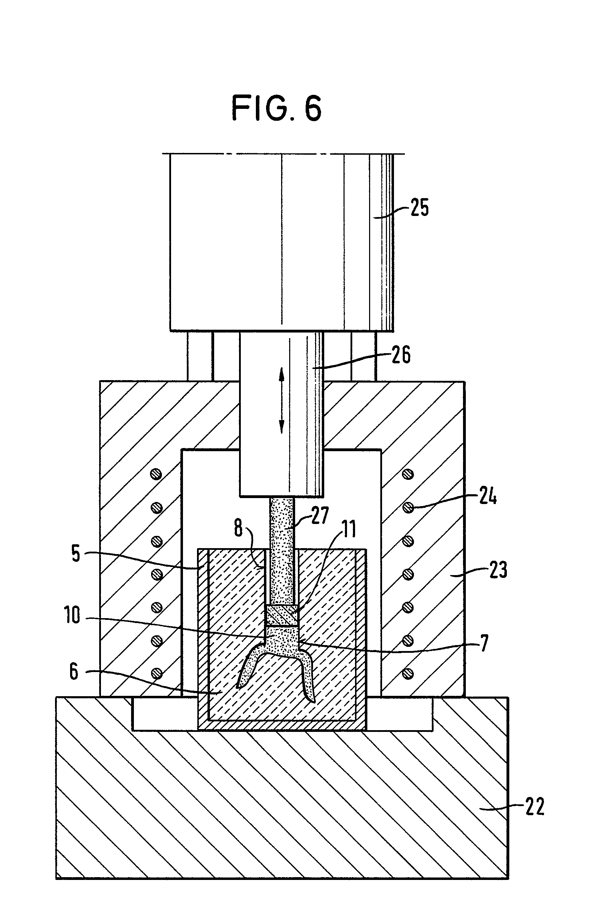

Besonders günstig gestaltet sich die Durchführung des erfindungsgemäßen Verfahrens, wenn man einen speziell dafür ausgelegten Ofen verwendet. Der Ofen (Fig. 6) besteht aus einem Unterteil 22 und einem Oberteil 23. Im Oberteil 23 ist eine Heizung 24 integriert. Durch einen außerhalb des Ofens angeordneten Preßzylinder 25 kann ein Kolben 26 auf und ab bewegt werden, der Druck auf eine Kolbenstange 27 ausübt.

Die Kolbenstange 27 hat vorzugsweise einen geringeren Durchmesser als der Abdichtkolben 11, während der Kolben 26 des Preßzylinders 25 vorzugsweise einen größeren Durchmesser als die Kolbenstange 27 hat, so daß die Küvette mit der Kolbenstange 27 nicht exakt zentriert werden muß. Es ist jedoch auch möglich, daß die Kolbenstange 27 gleichzeitig als Abdichtkolben dient, wodurch dann ein gesonderter Abdichtkolben 11 entfällt.

Im Betriebszustand befindet sich in dem Ofen die Küvette 5 mit der ausgehärteten Einbettmasse 6, in welcher wie oben beschrieben ein Formhohlraum 7 mit Gußkanal 8 gebildet wurde. In dem Gußkanal 8 sitzt der Abdichtkolben 11, über welchen Druck auf das Keramikmaterial 10 ausgeübt wird.

Der Ofen wird in üblicher Weise während des Aufheiz-und Abkühlvorganges von einer Elektronik gesteuert. Zum Einsetzen der Küvette 5 wird das Ofenoberteil 23 weggeklappt. Alternativ kann die Trennung zwischen Ofenunterteil 22 und -oberteil 23 auch derart erfolgen, daß das Oberteil 23 fahrstuhlartig an entsprechenden Führungen nach oben gefahren wird, um Platz für das Einsetzen der Küvette 5 zu - schaffen.

Der Kolben 26 ist luftdicht durch das Ofenoberteil 23 geführt und auch der Abschluß zwischen Oberteil und Unterteil ist luftdicht, damit sich der Innenraum des Ofens erforderlichenfalls evakuieren läßt. Hierfür ist der Ofeninnenraum an eine Unterdruckleitung anschließbar.

Wie oben beschrieben kann über die Preßvorrichtung 25 während des ganzen Aufheiz-und Abkühlvorganges, d.h. solange das Formmaterial plastifiziert ist, Druck ausgeübt werden. Andererseits ist es auch möglich, den Abdichtkolben 11 nur stoßweise mit Druck zu beaufschlagen, wobei dies erfindungsgemäß nicht nur zu Beginn zum Füllen des Formhohlraumes, sondern auch während des Härtens bzw. Abkühlens der Masse erfolgt.

## Ansprüche

1. Verfahren zum Herstellen von Zahnersatzteilen aus aushärtbarem keramischen Material oder einer Metallegierung unter Anwendung von Wärme und Druck, bei welchem auf einem Arbeitsstumpf (1) ein der Form des Zahnstumpfes maßgenau entsprechendes Modell (2) aus einem ausbrennbaren Material modelliert und am Modell ein den späteren Gußkanal (8) bildender Strang (3) angeformt wird, wonach das Modell in eine feuerfeste, aushärtbare Einbettmasse (6) eingebettet, durch Erwärmen das ausbrennbare Material entfernt und dadurch in der Einbettmasse ein entsprechender Formhohlraum (7) geschaffen wird, in den das keramische Material oder die Metallegierung eingebracht werden, und das Zahnersatzteil nach dem Brennen und Abkühlen entformt wird, dadurch gekennzeichnet, daß das keramische Material oder die Metallegierung durch Erhitzen plastifiziert und über einen im Gußkanal (8) angeordneten Abdichtkolben (11) mit Druck beaufschlagt und dadurch unter Druckanwendung in die Hohlform gepreßt, ausgehärtet und abgekühlt wird.

2. Verfahren nach Anspruch 1, dadurch gekennzeichnet, daß man zur Bildung des späteren Gußkanals einen Strang (3) in Form eines Zylinders an das Modell (2) anformt.

3. Verfahren nach Anspruch 2, dadurch gekennzeichnet, daß man den Zylinder (3) mit einer Wachsschicht (3a) umgibt und mit Wachs am Modell (2) anformt

4. Verfahren nach einem der Ansprüche 1 bis 3, dadurch gekennzeichnet, daß die Druckanwendung vor Erreichen der Höchsttemperatur beginnt und in einem einzigen oder in mehreren Druckstößen erfolgt, solange das Keramikmaterial oder die Legierung plastifiziert sind.

5. Verfahren nach einem der Ansprüche 1 bis 3, dadurch gekennzeichnet, daß der Druck ununterbrochen aufrecht erhalten wird, solange das Keramikmaterial oder die Legierung plastifiziert sind.

6. Verfahren nach einem der Ansprüche 1 bis 5, dadurch gekennzeichnet, daß man einen Druck von 0,5 bis 3,0 bar anwendet.

7. Verfahren nach einem der Ansprüche 1 bis 6, dadurch gekennzeichnet, daß ein aluminiumoxidhaltiges Keramikmaterial verwendet wird, das nach Erhitzen auf 1180 bis 1250°C 10 bis 40 min. lang auf dieser Temperatur gehalten wird.

8. Verfahren nach einem der Ansprüche 1 bis 6, dadurch gekennzeichnet, daß ein transluzentes Keramikmaterial verwendet wird, das bei 960°C erstmals gepreßt und während 20 min. auf dieser Temperatur gehalten wird, wonach weiteres Erhitzen auf 1060°C und erneutes Pressen und Halten dieser Temperatur während 20 min. folgt.

9. Verfahren nach einem der Ansprüche 1 bis 6, dadurch gekennzeichnet, daß ein magnesiumoxidhaltiges Keramikmaterial verwendet wird.

10. Verfahren nach einem der Ansprüche 1 bis 6, dadurch gekennzeichnet, daß ein Glasmaterial verwendet wird.

11. Verfahren nach einem der Ansprüche 1 bis 10, dadurch gekennzeichnet, daß man zur Bildung des späteren Gußkanals (8) einen zylinderförmigen Strang (3) aus Keramik-oder Legierungsmaterial verwendet.

12. Verfahren nach einem der Ansprüche 1 bis 11, dadurch gekennzeichnet, daß das Erhitzen unter Vakuum vorgenommen wird.

13. Verfahren nach einem der Ansprüche 1 bis 12, dadurch gekennzeichnet, daß als Einbettmasse (6) eine feuerfeste, selbsthärtende Masse aus phosphatgebundenem Quarz-Cristobalit oder eine Einbettmasse auf Zirkoniumoxidbasis verwendet wird.

14. Ofen zum Herstellen von Zahnersatzteilen mit integrierter Heizung, dadurch gekennzeichnet, daß er eine einen Formhohlraum (7) enthaltende Küvette (5) aufnimmt und mit einer Preßvorrichtung (25, 26) versehen ist, die über einer Kolbenstange (27) auf einen Abdichtkolben (11) im zum Formhohlraum (7) führenden Gußkanal (8) einwirkt.

15. Ofen nach Anspruch 14, dadurch gekennzeichnet, daß die Kolbenstange (27) selbst als Abdichtkolben (11) dient.

16. Ofen nach Anspruch 14 oder 15, dadurch gekennzeichnet, daß er evakuierbar ist.

FIG. 1

FIG. 2

FIG. 3

FIG. 4

FIG. 5

# FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | AT-B- 157 210 (DENTAL RESEARCH CORP.) <br> * Anspruch 1; Seite 1, Zeilen 24-36; Seite 2, Zeile 1 - Seite 3, Zeile 10; Figur 1 * | 1,2,5, 14,15 | A 61 C 13/00 <br> A 61 C 5/10 <br> A 61 C 13/20 |
| | --- | | |
| X | DE-C- 664 133 (SEEFELDER) <br><br> * Seite 1, Zeilen 1-69; Figuren 1, 2 * | 1,14, 15 | |
| | --- | | |
| A | DE-A- 664 133 | 2 | |
| | --- | | |
| D,A | EP-A-0 030 850 (COORS PORCELAIN CO. et al.) <br> * Seite 9, Zeile 9 - Seite 10, Zeile 22 * | 7 | |
| | | | **RECHERCHIERTE SACHGEBIETE (Int. Cl.4)** |
| D,A | EP-A-0 022 655 (CORNING GLASS WORKS) <br> * Seite 9, Zeile 5 - Seite 10, Zeile 13 * | 10 | A 61 C 5/00 <br> A 61 C 13/00 <br> F 27 B 17/00 |
| | --- | | |
| A | AT-B- 236 033 (ZAHNFABRIK WIENAND SÖHNE & CO. GMBH) <br> * Seite 1, Zeilen 12-14 * | 12 | |
| | --- | | |
| A | DE-C- 678 756 (ROSENTHAL-ISOLATOREN GMBH) <br> * Seite 1, Zeilen 16-48 * | 13 | |
| | ---     -/- | | |

Der vorliegende Recherchenbericht wurde für alle Patentansprüche erstellt.

| Recherchenort <br> BERLIN | Abschlußdatum der Recherche <br> 06-04-1987 | Prüfer <br> SIMON J J P |
|---|---|---|

| EINSCHLÄGIGE DOKUMENTE | | | | Seite 2 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int. Cl.4) |
| A | CH-A- 188 148 (I.G. FARBENINDUSTRIE AG)<br>* Seite 1, rechte Spalte, Zeile 15 - Seite 2, linke Spalte, Zeile 31 *<br><br>---<br> | | 13 | |
| A | EP-A-0 094 643 (WISMANN)<br>* Zusammenfassung *<br><br>----- | | 16 | |
| | | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| BERLIN | 06-04-1987 | SIMON J J P |